# EUROPEAN PATENT APPLICATION

(11) **EP 2 158 957 A1**
(43) Date of publication of application: **03.03.2010**
(21) Application number: 09252092.3
(22) Date of filing: 28.08.2009
(51) Int. Cl.: B01D 61/36, B01D 63/04

(54) **Heat recuperating membrane distillation apparatus and system**

(30) Priority: 29.08.2008 US 231288
(71) Applicant: MILTON ROY COMPANY, Ivyland, PA 18974-0577 (US)
(72) Inventor: Ma, Zidu, Ellington, CT 06029 (US); Irish, James R., Middlefield, CT 06455 (US); Liao, Xiaohong, South Windsor, CT 06074 (US)
(74) Representative: Tomlinson, Kerry John

(57) **Abstract**

A contactor module (12) for separating a distillate from a feed solution includes an outer casing (52) with an interior region (74), a distillate collection chamber (66), and pluralities of hollow fiber membranes (78) and hollow tubes (80) extending through the distillate collection chamber, where the hollow fiber membranes are configured to allow vapor transmission, and the hollow tubes are configured to substantially prevent vapor transmission and further configured to allow transmission of thermal energy.

## Description

### BACKGROUND

The present invention relates to distillation systems for liquid treatment processes. In particular, the present invention relates to distillation systems containing hollow fiber contactor modules for separating distillate fluids from feed solutions in liquid treatment processes.

In recent years, membrane distillation has become increasingly popular in a variety of fluid-treatment applications. The membranes are typically hydrophobic and microporous to keep the feed solution separated from that of the distillate during operation. Both hollow fiber and flat sheet membranes have been used in laboratory studies. For membrane distillation, hollow fiber membranes are typically employed in tube/shell configurations, where bundles of hollow fiber membranes are arranged along the longitudinal axes of the modules. Each hollow fiber membrane in the bundle is typically a hydrophobic, microporous membrane having an exterior surface and an inner hollow tubular region. In some membrane distillation systems, the exterior surfaces of the hollow fiber membranes face a shell side of the module, which is the portion of the module containing the feed solution. The inner hollow tubular regions define a tube side of the module, which provides a conduit for collecting the distillate fluids separated from the feed solution.

During membrane distillation, the feed solution is typically preheated to form a temperature differential across the hollow fiber membranes. This temperature differential creates a vapor pressure differential between the shell side and the tube side of the fibers in the module, which causes a portion of the feed solution to evaporate near the pore entrance on the feed solution side and the vapor to transmit through the hollow fiber membranes. The transmitted vapor then condenses at a gas/liquid interface near the pore entrance of the membranes on the distillate side, thereby providing the desired distillate. Because the vaporization of a liquid is involved in the separation process, a large amount of thermal energy is transferred from the feed solution to the distillate. Being able to recoup the thermal energy significantly affects the thermal efficiency of the membrane distillation processes. Thus, there is an ongoing need for the recuperation of thermal energy in membrane distillation processes.

### SUMMARY

Embodiments of the present invention include a contactor module with an outer casing having an interior region, pluralities of hollow fiber membranes and hollow tubes, and a distillate collection chamber. The hollow fiber membranes extend through the interior region and are configured to allow vapor transmission. The hollow tubes extend through the interior region and are configured to substantially prevent vapor transmission and to allow transmission of thermal energy. Distillate is collected in the distillate collection chamber, through which the hollow fiber membranes and hollow tubes extend.

One exemplary embodiment of the present invention includes a distillation apparatus having second feed inlet and outlet manifolds and a contactor module. The contactor module includes an outer casing having an interior region, four seals within the outer casing dividing the interior region into three chambers, pluralities of hollow fiber membranes and hollow tubes, and a distillate outlet. The hollow fiber membranes extend from a first feed inlet chamber to a first feed outlet chamber and are configured to allow vapor transmission. The hollow tubes extend from the second feed inlet manifold to the second feed outlet manifold and are configured to substantially prevent vapor transmission and to allow transmission of thermal energy.

Further exemplary embodiments include a system for separating distillate from a feed solution having first and second feed loops for providing the feed solution, at least one contactor module having three chambers, pluralities of hollow fiber membranes and hollow tubes, and a distillate outlet. The hollow fiber membranes extend from a first feed inlet chamber to a first feed outlet chamber, are in fluid communication with the first feed loop, and are configured to allow vapor transmission. The hollow tubes extend from a second feed inlet manifold to a second feed outlet manifold, are in fluid communication with the second feed loop, and are configured to substantially prevent vapor transmission and to allow transmission of thermal energy.

### BRIEF DESCRIPTION OF THE DRAWINGS

FIG. 1 is a schematic illustration of a distillation system that includes a hollow fiber contactor module.

FIG. 2A is a schematic illustration of one embodiment of an interior of the hollow fiber contactor module.

FIG. 2B is a schematic illustration of an alternate embodiment of an interior of the hollow fiber contactor module.

FIG. 3A is a cross section view of one embodiment of an interior of the hollow fiber contactor module.

FIG. 3B is a cross section view of an alternate embodiment of an interior of the hollow fiber contactor module.

FIG. 4 is a schematic illustration of an alternate embodiment of an interior of the hollow fiber contactor module.

FIG. 5A is an expanded sectional view of one embodiment of a hollow fiber membrane configured to allow vapor transmission.

FIG. 5B is an expanded sectional view of one embodiment of a hollow tube configured to prevent vapor transmission but allow thermal transmission.

### DETAILED DESCRIPTION

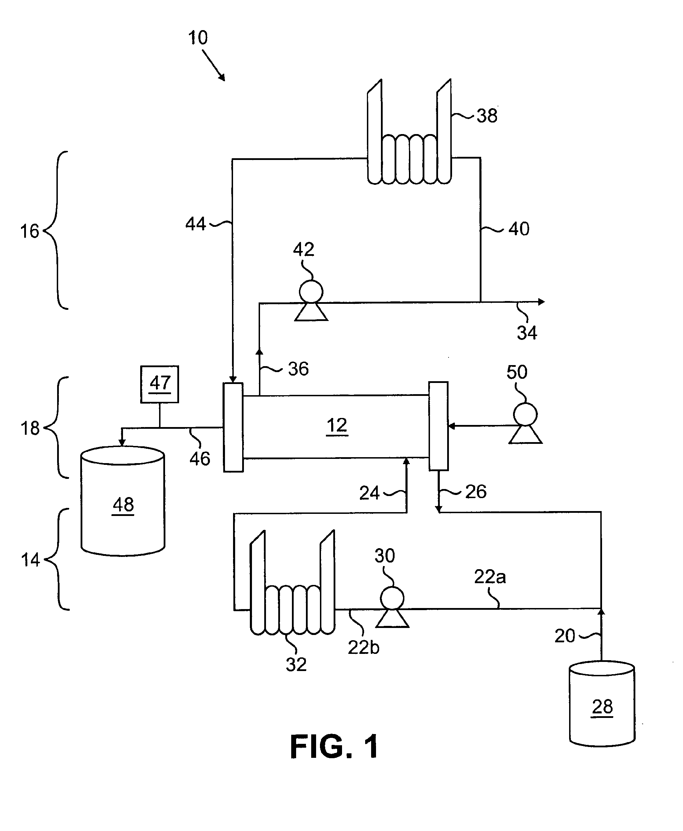

FIG. 1 is a schematic illustration of distillation system 10, which includes contactor module 12, first feed loop 14, second feed loop 16, and distillate section 18, and is a suitable system for separating a distillate from a feed solution. As discussed below, first feed loop 14 provides the feed solution to contactor module 12 at an elevated temperature. Also as discussed below, second feed loop 16 provides the feed solution to contactor module 12 at a cooled (reduced) temperature. The combination of the cooled feed solution and the heated feed solution flowing into contactor module 12 creates temperature differentials within the contactor module 12. The temperature differentials create corresponding vapor pressure differentials. The vapor pressure differentials drive the separation rate of a distillate from the feed solution. The cooled feed solution may serve as a coolant to condense the vapor in the distillate section 18.

Examples of suitable feed solutions for use with distillation system 10 include solutions containing compounds that are separable by vapor pressure differentials across hydrophobic, microporous membranes, such as seawater, brackish water, and other aqueous brine solutions for water and wastewater treatment processes. As used herein, the term "solution" refers to a carrier liquid that contains one or more solids that are fully dissolved, partially dissolved, dispersed, emulsified, or otherwise suspended in the carrier liquid(s). For example, the feed solution may be an aqueous brine solution containing salt that is at least partially dissolved in a water carrier. In this example, distillation system 10 may be used to separate at least a portion of the water from the aqueous brine solution to provide the clean water as the distillate fluid. Distillation system 10 also includes standard fluid processing equipment (not shown), such as process control units, fluid pumps, and filters.

Contactor module 12 is a hollow fiber contactor module that separates the distillate fluid from the feed solution (e.g., water from an aqueous brine solution) via vapor pressure differentials. As discussed below, contactor module 12 is divided into a shell side (not shown in FIG. 1), a first tube side (not shown in FIG. 1), and a second tube side (not shown in FIG. 1), where the shell side is in fluid communication with distillate section 18, the first tube side is in fluid communication with the first feed loop 14, and the second tube side is in fluid communication with the second feed loop 16.

Contactor modules 12 in distillation systems 10 according to the present embodiments can operate in liquid gap or air gap modes. In both operational modes, the first tube side and the shell side are separated by a hydrophobic membrane and the first tube side contains the feed solution. In liquid gap mode, liquid distillate is allowed to contact both the membrane and a cooling/condensing surface. This differs from the operation of a module using air gap mode. In air gap mode, distillate contact with both the membrane and the condensing surface is avoided. In some cases, such contact can impair the function of contactor module 12.

In liquid gap mode, the shell side of contactor module 12 contains a liquid (distillate). The shell side also contains an element that has a temperature lower than the first tube side. According to the present embodiment, this element is the exterior surface of the second tube side. The second tube side contains feed solution that is at a lower temperature than the feed solution in the first tube side. The second tube side cools the air or distillate in the shell side, and thus creates a vapor pressure differential between the first tube side and the cooler shell side. This vapor pressure differential causes transport of part of the feed solution from the first tube side to the shell side. The part of the feed solution transported across the hydrophobic membrane may then condense in the shell side on the exterior surfaces of the first and second tube sides and then join with the distillate and be collected. In air gap mode, the shell side of contactor module 12 contains a gas (air).

For the purposes of illustration, operation in liquid gap mode will be described in detail. Differences between liquid gap mode and air gap mode, where applicable, are provided below. During operation, the heated feed solution flows from first feed loop 14 to the first tube side of contactor module 12. While the feed solution flows through the first tube side of contactor module 12, part of the feed solution evaporates and the resulting vapor is transported through the first tube walls into the distillate section and a slightly concentrated feed solution remains as residual. The vapor condenses on the shell side of first tube walls in the distillate section 18 of contactor module 12. The residual concentrated feed solution exits the first tube side of contactor module 12 and enters the second feed loop 16 where it is cooled. The cooled residual concentrated feed solution flows from second feed loop 16 to the second tube side of contactor module 12. While the cooled residual concentrated feed solution flows through the second tube side of contactor module 12, heat transfers from the vapor and condensate in the distillate section 18 of contactor module 12 to the second tube side. The cooled residual concentrated feed solution exits the second tube side of contactor module 12 and reenters the first feed loop 14.

While distillation system 10 is shown with a single contactor module (i.e., contactor module 12), distillation system 10 may alternatively include additional numbers of contactor modules 12. Examples of suitable numbers of contactor modules 12 for use in distillation system 10 range from one to one hundred; particularly suitable numbers of contactor modules 12 for use in distillation system 10 range from one to twenty-five; and even more particularly suitable numbers of contactor modules 12 for use in distillation system 10 range from one to ten. The contactor modules 12 can be arranged in serial configurations, parallel configurations, and combinations thereof.

First feed loop 14 is a fluid pathway for the feed solution, and includes feed source line 20, feed conveyance lines 22a-22b, feed inlet line 24, feed outlet line 26, feed reservoir tank 28, fluid pump 30, and heat exchanger 32. Feed source line 20 is a valve-controlled fluid conduit for transferring the feed solution from feed reservoir tank 28 to first feed loop 14. During operation of distillation system 10, portions of the feed solution are separated within contactor module 12 to provide the distillate in distillate section 18. As such, feed source line 20 provides additional feed solution to mix with the residual concentrated feed solution and balance the flow of feed solution in first feed loop 14.

Feed conveyance lines 22a-22b are fluid conduits for first feed loop 14, and provide a clockwise flow path in the embodiment shown in FIG. 1. Feed inlet line 24 is a fluid conduit that interconnects first feed loop 14 and contactor module 12, thereby allowing the feed solution to flow into the first tube side of contactor module 12. Feed outlet line 26 is a fluid conduit that interconnects contactor module 12 to feed conveyance line 22a. This allows the residual concentrated feed solution to exit the second tube side of contactor module 12, and reenter feed loop 14.

Feed reservoir tank 28 is a container that supplies feed solution into feed conveyance line 22a by way of feed source line 20. Feed reservoir tank 28 provides a reservoir of feed solution for the operation. Additional feed solution may be needed to balance the volume of condensate produced or maintain pressure within first feed loop 14. When additional feed solution is needed, feed solution from feed reservoir tank 28 is added to first feed loop 14. Fluid pump 30 is a pump that interconnects feed conveyance lines 22a and 22b, and is configured to deliver the feed solution within feed loop 14 to the first tube side of contactor module 12.

As discussed below, the feed solution is maintained in a liquid phase to prevent contaminants of the feed solution from entering the shell side and mixing with the distillate in distillate section 18. This would otherwise reduce the purity of the distillate, and could potentially require discarding the distillate product. The pressure of the feed solution entering contactor module 12 is also less than a liquid penetration pressure of the first tube side membranes (first tubes) of contactor module 12. The liquid penetration pressure is the pressure at which liquid from the feed solution penetrates through the pores of the first tube side membranes (first tubes) of contactor module 12 (i.e., from the tube side to the shell side), and is a function of several factors, such as the average pore radius of the membranes and the average liquid contact angle of the membranes (i.e., hydrophobicity of the membranes). Liquid penetration of the feed solution from the first tube side into the shell side of contactor module 12 may result in the contamination of the distillate, thereby reducing the purity of the distillate. Resistance to the penetration of liquid into the membrane pores allows the shell side to be pressurized to a pressure below the liquid penetration pressure.

Heat exchanger 32 is a heat-providing heat exchanger that interconnects feed conveyance line 22c and feed inlet line 24, thereby increasing the temperature of the feed solution passing from feed conveyance line 22c to feed inlet line 24. Accordingly, heat exchanger 32 heats the feed solution to an elevated temperature before it enters the first tube side membranes of contactor module 12. As discussed below, heating the feed solution allows the feed solution to enter contactor module 12 at an elevated temperature to increase the separation rate within contactor module 12.

Some membrane materials are sensitive to thermal degradation. Thus, the elevated temperature of the feed solution entering contactor module 12 should be balanced to provide a high vapor pressure driving force for distillation and limit the thermal degradation of the first tube side membranes (first tubes) of contactor module 12 (not shown in FIG. 1). This reduces the risk of damaging contactor module 12 during operation. Examples of suitable elevated temperatures for aqueous-based feed solutions range from about 50 °C to about 120°C, with particularly suitable elevated temperatures ranging from about 70 °C to about 100°C. While distillation system 10 is shown with a single heat exchanger (i.e., heat exchanger 32), distillation system 10 may alternatively include multiple heat exchangers to heat the feed solution to the elevated temperature.

Second feed loop 16 is a fluid pathway for the residual concentrated feed solution, and includes residual concentrated feed solution outlet line 36, heat exchanger 38, residual concentrated feed solution conveyance line 40, residual concentrated feed solution inlet line 44 and discharge line 34. Second feed loop 16 also optionally includes residual concentrated feed solution circulation pump 42. In some embodiments, fluid pump 30 of first feed loop 14 may provide enough pressure to drive the system without the need for an additional pump in second feed loop 16.

Second feed loop 16 provides a flow of cool fluid (residual concentrated feed solution) to the second tube side of contactor module 12 to assist the condensation process. Heat exchanger 38 is a cooling heat exchanger that interconnects residual concentrated feed solution conveyance line 40 and residual concentrated feed solution inlet line 44, thereby lowering the temperature of the residual concentrated feed solution flowing through second feed loop 16. Suitable lowered temperatures for the residual concentrated feed solution may vary depending on the composition of the residual concentrated feed solution. For aqueous residual concentrated feed solutions, examples of suitable lowered temperatures range from about 5 °C to about 75 °C, with particularly suitable lowered temperatures ranging from about 20 °C to about 55 °C.

Residual concentrated feed solution conveyance line 40 is a fluid conduit for second feed loop 16, and provides for a counter-clockwise flow path for the residual concentrated feed solution in the embodiment shown in FIG. 1. Optional residual concentrated feed solution circulation pump 42 is a pump that interconnects residual concentrated feed solution outlet line 36 and residual concentrated feed solution conveyance line 40, and is configured to circulate the residual concentrated feed solution within second feed loop 16. Residual concentrated feed solution outlet line 36 and residual concentrated feed solution inlet line 44 function as residual concentrated feed solution outlet and inlet lines for contactor module 12, respectively. Accordingly, residual concentrated feed solution circulation pump 42 may be connected to residual concentrated feed solution conveyance line 40 for supplying the residual concentrated feed solution to heat exchanger 38 and to contactor module 12 via residual concentrated feed solution inlet line 44. Residual concentrated feed solution conveyance line 40 is also connected to discharge line 34, which is a valve-controlled fluid conduit for purging a portion of the residual concentrated feed solution.

During operation, the feed solution flows through first feed loop 14, and is respectively pumped by fluid pump 30 and heated by heat exchanger 32 to the elevated temperature. While flowing through first feed loop 14, the feed solution flows into the first tube side of contactor module 12 via feed inlet line 24. Also during operation, a supply of the residual concentrated feed solution flows through second feed loop 16, and is cooled by heat exchanger 38 to a reduced temperature. While flowing through second feed loop 16, the cooled residual concentrated feed solution flows into the second tube side of contactor module 12 via residual concentrated feed solution inlet line 44.

The cooled residual concentrated feed solution and the heated feed solution flowing into contactor module 12 create a temperature differential between the first tube side and the shell side of contactor module 12. The cooled residual concentrated feed solution on the second tube side cools the distillate on the shell side to provide a temperature differential between the shell side and the first tube side. For example, a feed solution entering the first tube side of contactor module 12 at about 80 °C and a residual concentrated feed solution entering the second tube side of contactor module 12 at about 40 °C provide a temperature differential of about 40 °C between the first and second tube sides. As the cooled residual concentrated feed solution on the second tube side cools the distillate on the shell side, the temperature differential between the first tube side and the shell side increases. This correspondingly increases the separation rate of the distillate from the feed solution, where the separated distillate transfers from the first tube side to the shell side of contactor module 12. The separated distillate then exits contactor module 12 via distillate outlet line 46, and is subsequently collected in recovery tank 48 as the distillate product (e.g., clean water in a water treatment process). Recovery tank 48 is a container for receiving the distillate obtained from contactor module 12.

Distillate outlet line 46 may contain a flow transducer 47 to monitor the flow through distillate outlet line 46 and into recovery tank 48. The information collected from flow transducer 47 may be used to regulate the addition of additional feed solution to first feed loop 14 via feed source line 20. This allows distillation system 10 to operate in a steady state and at optimal efficiency. Additional feed solution is also added to first feed loop 14 via feed source line 20 to account for any residual concentrated feed solution removed from second feed loop 16 through discharge line 34. If discharge line 34 is closed, no residual concentrated feed solution is removed and all of the residual concentrated feed solution is returned to contactor module 12 and first feed loop 14. In exemplary embodiments of distillation system 10, discharge line 34 removes between about 1% and about 67% of the residual concentrated feed solution. The rate of removal is dependent upon the distillation application, the salt concentration of the feed solution and the overall water recovery desired.

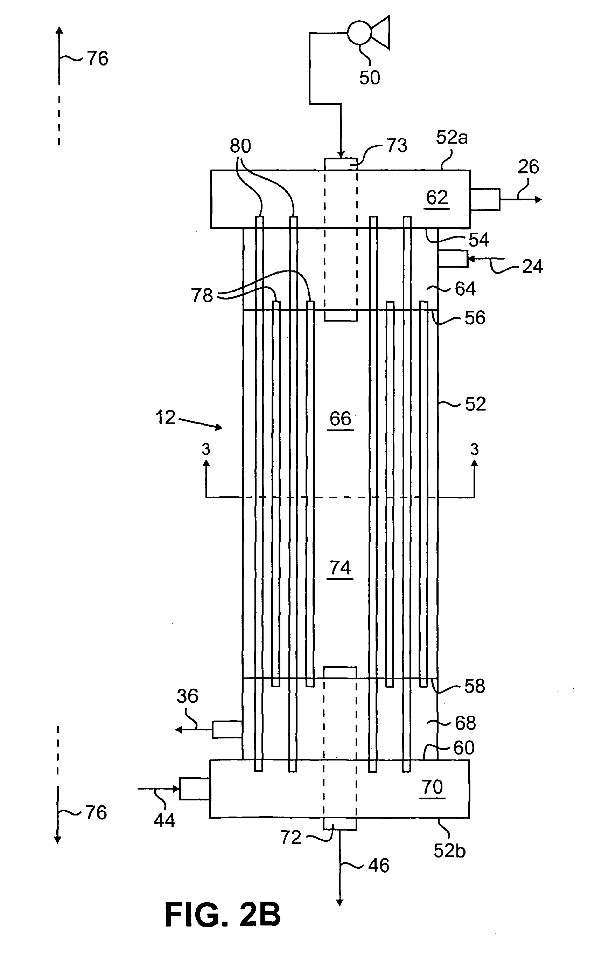

Optionally, a distillate recirculation pump 50 or blower 50A may be in fluid communication with the distillate section 18. FIGS. 1 and 2B illustrate distillate recirculation pump 50 in fluid communication with contactor module 12. Blower 50A may be substituted for distillate recirculation pump 50. In direct contact mode, distillate recirculation pump 50 may recirculate the distillate within distillate section 18 of contactor module 12. Distillate is not heated in the recirculation process and is cooled by heat transfer with the cooled residual concentrated feed solution on the second tube side of contactor module 12. The distillate may be cooled while recirculating outside contactor module 12. Because the recirculating distillate has a lower temperature than the feed solution in the first tube side, a vapor pressure differential between the first tube side and the shell side is created as described above and drives distillation. Distillate recirculation pump 50 or blower 50A may also aid in the collection of distillate by directing distillate to distillate outlet line 46.

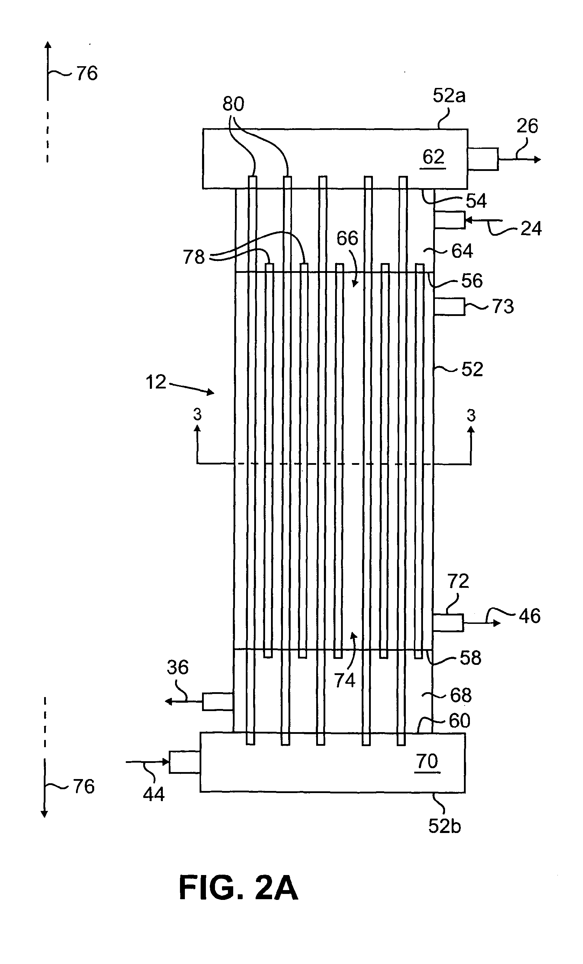

FIG. 2A is a schematic illustration of one embodiment of a contactor module 12, which includes outer casing 52, potting resin walls 54, 56, 58, and 60, hollow fiber membranes 78 (first tubes) and hollow recuperators 80 (second tubes). Outer casing 52 is a rigid structure extending along a vertical longitudinal axis (referred to as longitudinal axis 76), and defines interior region 74 of contactor module 12. In an exemplary embodiment, contactor module 12 will have a vertical longitudinal axis. This configuration provides for gravity fed collection of distillate without the need for additional pumps. The embodiment of FIG. 2A illustrates an interior region having three chambers. The interior region 74 includes first chamber 64, second (contactor) chamber 66, and third chamber 68. Outer casing 52 also includes couplings (not shown) for connecting contactor module 12 to feed inlet line 24, residual concentrated feed solution outlet line 36, and distillate outlet line 46. In some exemplary embodiments, contactor module 12 is a replaceable unit in which opposing ends of contactor module engage with first manifold 62 and second manifold 70. Once contactor module 12 no longer operates as desired, contactor module 12 can be easily removed and replaced with a new contactor module 12. In the alternative, contactor module 12, first manifold 62 and second manifold 70 can be a single unit.

Potting resin walls 54, 56, 58, and 60 are seals extending generally perpendicular to longitudinal axis 76, and are formed from one or more sealant materials, such as acrylate, polyurethane, and epoxy-based materials. Accordingly, potting resin walls 54, 56, 58, and 60 divide interior region 74 into first chamber 64, second (contactor) chamber 66, and third chamber 68. First manifold 62 is a chamber disposed between first manifold casing 52a and potting resin wall 54, and is open to feed outlet line 26 in the embodiment illustrated in FIG. 2A. First chamber 64 is the chamber disposed between potting resin walls 54 and 56, within outer casing 52, and is open to feed inlet line 24. Second (contactor) chamber 66 is the chamber disposed between potting resin walls 56 and 58, within outer casing 52, and is in fluid communication with distillate fluid outlet line 46. Third chamber 68 is the chamber disposed between potting resin walls 58 and 60 within outer casing 52, and is open to residual concentrated feed solution outlet line 36. Second manifold 70 is a chamber disposed between second manifold casing 52b and potting resin wall 60, and is open to residual concentrated feed solution inlet line 44 in the embodiment illustrated in FIG. 2A. As discussed below, second (contactor) chamber 66 is the section of contactor module 12 where the distillate separates from the feed solution. Distillate outlet section 72 connects second (contactor) chamber 66 and distillate outlet line 46, and is open to distillate outlet line 46.

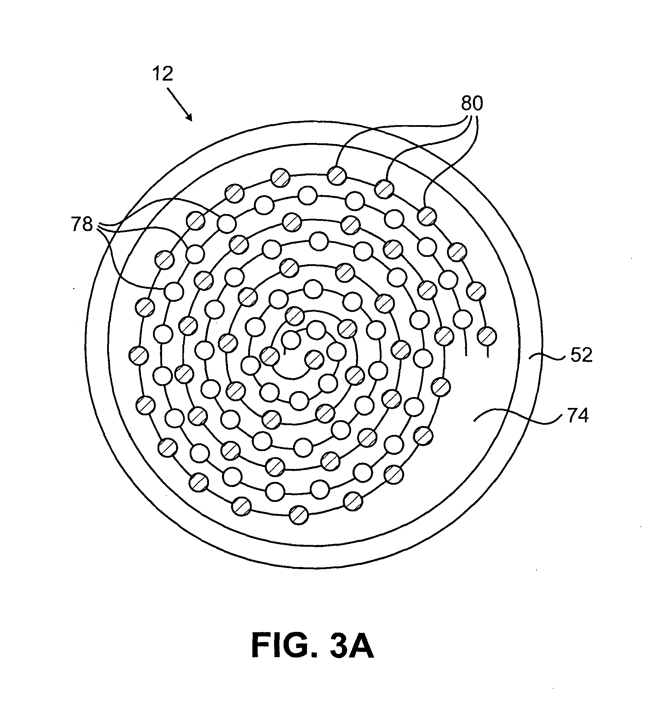

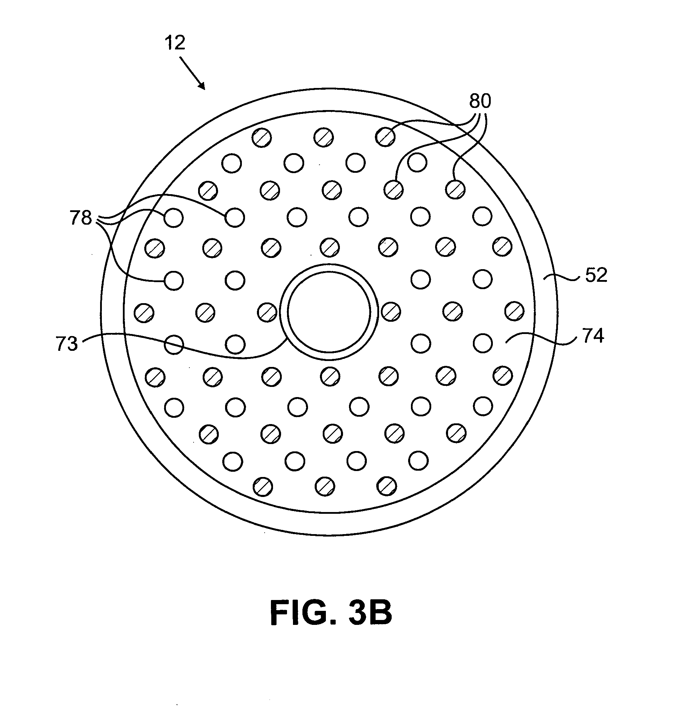

According to the embodiment illustrated in FIG. 2A, hollow fiber membranes 78 are a plurality of tubular membranes that extend along longitudinal axis 76 between first chamber 64 and third chamber 68. Hollow fiber membranes 78 are formed from one or more hydrophobic, microporous materials that are capable of separating the distillate from the feed solution via vapor pressure differentials. Hollow fiber membranes 78 and hollow recuperators 80 are generally arranged proximately to each other throughout the volume of interior region 74 to provide a large total membrane surface area and provide the capability for optimal vapor pressure differentials. In the embodiment illustrated in FIG. 2A, hollow fiber membranes 78 and hollow recuperators 80 substantially fill the open volume of second (contactor) chamber 66 in a spiral wound configuration (shown in FIG. 3A). This allows the distillate to conduct thermal energy from the shell side of hollow fiber membranes 78 (first tubes) to the shell side of hollow recuperators 80 (second tubes). Alternatively, second (contactor) chamber 66 may be occupied by hollow fiber membranes 78 and hollow recuperators 80 in an alternate layered (stacked) configuration (shown in FIG. 3B) to provide thermal energy transfer from the shell side of the hollow fiber membranes 78 to the shell side of the recuperators 80 through the distillate.

According to the embodiment illustrated in FIG. 2A, hollow fiber membranes 78 (first tubes) each include an inner hollow region that extends through potting resin walls 56 and 58, and along longitudinal axis 76. This provides a first tube side flow path for the feed solution between first chamber 64 and third chamber 68 (i.e., the feed solution may flow through the inner hollow regions of hollow fiber membranes 78). Conversely, the shell-side flow path of the distillate extends through the interstitial spaces between the exterior surfaces of hollow fiber membranes 78 and hollow recuperators 80, within second (contactor) chamber 66.

According to the embodiment illustrated in FIG. 2A, hollow recuperators 80 (second tubes) are a plurality of hollow tubes that extend along longitudinal axis 76 between first manifold 62 and second manifold 70. Hollow recuperators 80 are longitudinally offset from hollow fiber membranes 78. In this embodiment, hollow recuperators 80 are longer than hollow fiber membranes 78. Hollow recuperators 80 have non-porous and solid walls. Thus, hollow recuperators 80 prevent the transfer of distillate to the residual concentrated feed solution and the transfer of residual concentrated feed solution to the distillate across their non-porous and solid walls. Hollow recuperators 80 are spaced throughout the volume of interior region 74 near the hollow fiber membranes 78. The distance between the shell side surface of the hollow fiber membranes 78 and the shell side surface of the hollow recuperators 80 is determined by the mode of operation. In liquid gap mode, spacing between hollow fiber membranes 78 and hollow recuperators 80 can be minimized as long as the local pressure on the shell side is below the liquid penetration pressure of hollow fiber membranes 78. Minimized spacing significantly increases heat transfer from the surfaces of hollow fiber membranes 78 to the surfaces of hollow recuperators 80. This significantly increases the thermal efficiency of contactor module 12. In one embodiment, hollow fiber membranes 78 and hollow recuperators 80 substantially fill the open volume of second (contactor) chamber 66. The volume outside hollow fiber membranes 78 and hollow recuperators 80 is on the shell side of second (contactor) chamber 66 and allows the cooled residual concentrated feed solution to travel through second (contactor) chamber 66. Alternatively, one or more portions of second (contactor) chamber 66 may be unoccupied by hollow fiber membranes 78 or hollow recuperators 80, thereby providing larger flow paths for distillate. FIG. 2B illustrates an alternate embodiment in which hollow fiber membranes 78 and hollow recuperators 80 are absent from the center of second (contactor) chamber 66 to make room for contactor inlet 73 and distillate outlet section 72.

According to the embodiment illustrated in FIG. 2A, hollow recuperators 80 (second tubes) each include an inner hollow region (not shown in FIG. 2A) that extends through potting resin walls 54, 56, 58, and 60 and along longitudinal axis 76. This provides a second tube side flow path for the cooled residual concentrated feed solution between second manifold 70 and first manifold 62 (i.e., the cooled residual concentrated feed solution may flow through the inner hollow regions of hollow recuperators 80).

When present, optional distillate recirculation pump 50 is in fluid communication with distillate section 18. Distillate recirculation pump 50 may be in communication with second (contactor) chamber 66 via contactor inlet 73. Distillate recirculation pump 50 may provide means for circulating distillate within distillate section 18. A portion of distillate may be collected during recirculation. Recirculation may also increase mixing on the shell side of contactor module 12, which increases the vapor pressure differential between the first tube side and the shell side. Distillate recirculation pump 50 may be configured to direct a suitable fluid, i.e. collected or additional distillate, into second (contactor) chamber 66. The delivered suitable fluid drives the distillate which has condensed on the shell side of hollow fiber membranes 78 and hollow recuperators 80 towards the distillate outlet section 72 and distillate outlet line 46 for collection. By driving the distillate towards the distillate outlet section 72, mixing on the shell side may be increased thereby increasing the vapor pressure differential between the first tube side and the shell side and, thus, increasing the rate at which distillate is separated from the feed solution by hollow fiber membranes 78.

FIG. 3A illustrates a cross section of one embodiment of contactor module 12. FIG. 3A illustrates an exemplary contactor module 12 where hollow fiber membranes 78 and hollow recuperators 80 are arranged in a spiral wound configuration. Hollow fiber membranes 78, which have porous membrane walls, are spaced throughout interior region 74 and are indicated in FIG. 3A by open circular areas. The volume inside of hollow fiber membranes 78 is on the first tube side. Hollow recuperators 80, which have non-porous and solid walls, are also spaced throughout interior region 74 and are indicated in FIG. 3A by hatched circular areas. The volume inside of hollow recuperators 80 is on the second tube side. The interstitial volume outside and between hollow fiber membranes 78 and hollow recuperators 80 within the interior region 74 is on the shell side. Each hollow fiber membrane 78 is located proximately to a hollow recuperator 80 and vice versa. This configuration, provides for optimal temperature differentials between the first tube side and the shell side. Other embodiments of contactor module 12 may have an alternate layered (stacked) arrangement of hollow fiber membranes 78 and hollow recuperators 80 (shown in FIG. 3B). The hollow fiber membranes 78 and hollow recuperators 80 in alternate embodiments function in the same manner, as described below.

For ease of manufacture and assembly, one or more groups of hollow fiber membranes 78 may be attached to fabric layers at predetermined intervals. Hollow recuperators 80 may also be attached to separate fabric layers at predetermined intervals. The layers of hollow fiber membranes 78 and hollow recuperators 80 can be arranged side by side and wound in a spiral fashion within the interior region as illustrated in FIG. 3A. This configuration provides for proximate locations of the hollow fiber membranes 78 and the hollow recuperators 80. In this configuration, potting resin walls 54, 56, 58, and 60 may be formed according to the method described by Huang et al. in U.S. Patent No. 5,284,584, in which high-strength, solvent resistant thermoplastic resin is extruded onto the groups of hollow fiber membranes and hollow recuperators. Additionally, alternating layers (stacks) of grouped hollow fiber membranes 78 and grouped hollow recuperators 80 may be used to provide the embodiment illustrated in FIG. 3B.

As discussed below, feed solution heated to an elevated temperature in first feed loop 14 is pumped through hollow fiber membranes 78. Due to vapor pressure differentials between the first tube side and the shell side, distillate separates from the feed solution within hollow fiber membranes 78, the first tube side, and the distillate crosses the hollow fiber membranes 78 and into the interstitial volume of interior region 74, the shell side. Meanwhile, residual concentrated feed solution cooled in second feed loop 16 is pumped through hollow recuperators 80. Because of temperature differentials between the second tube side and the shell side, the cooled residual concentrated feed solution on the second tube side absorbs heat energy from the warmer distillate in the interstitial volume of interior region 74 across hollow recuperators 80, thereby cooling the distillate.

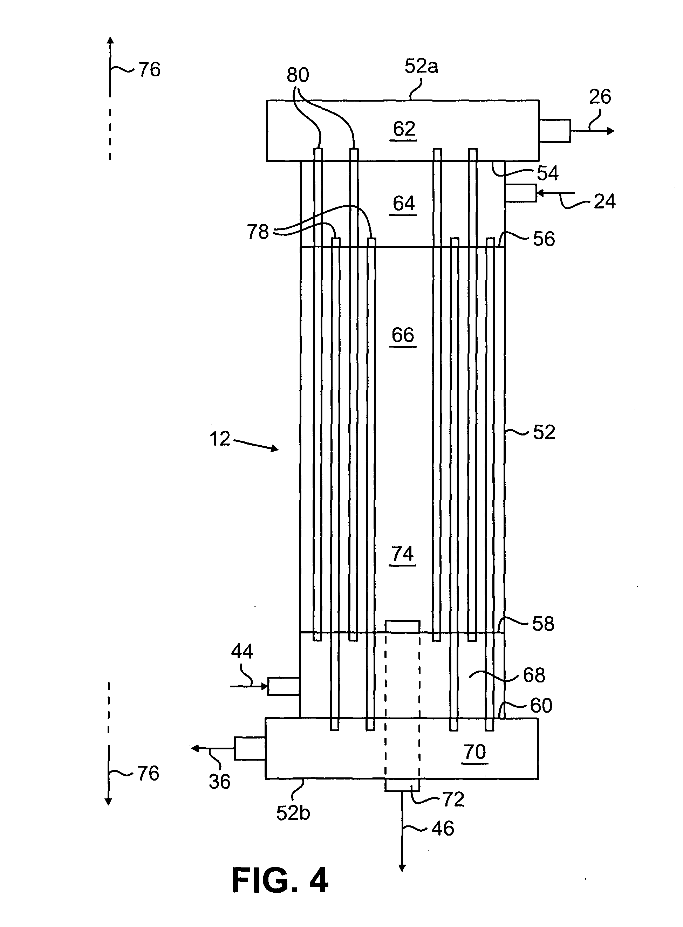

FIG. 4 is a schematic illustration of an alternate embodiment of a contactor module 12, which includes outer casing 52, potting resin walls 54, 56, 58, and 60, and hollow fiber membranes 78 and hollow recuperators 80. Like the embodiment of FIG. 2A, potting resin walls 54, 56, 58, and 60 divide interior region 74 into first chamber 64, second (contactor) chamber 66, and third chamber 68. FIG. 4 illustrates an alternative configuration of hollow fiber membranes 78 and hollow recuperators 80, however. In this embodiment, hollow fiber membranes 78 and hollow recuperators 80 have approximately or substantially the same length along the longitudinal axis, but are offset from one another. Hollow fiber membranes 78 are a plurality of porous tubular membranes, and extend along longitudinal axis 76 between first chamber 64 and second manifold 70. Hollow recuperators 80 are a plurality of hollow tubes with non-porous and solid walls, and extend along longitudinal axis 76 between third chamber 68 and first manifold 62. Unlike the embodiment illustrated in FIG. 2A, residual concentrated feed solution inlet line 44 is in fluid communication with third chamber 68, and residual concentrated feed solution outlet line 36 is in fluid communication with second manifold 70.

The operation of distillation system 10 will be described with reference to the embodiment of FIG. 2A. Note that alternate embodiments, while having the same number of chambers as the embodiment of FIG. 2A, may have chambers that perform different functions from those of the embodiment of FIG. 2A, but each embodiment of the present invention will include one or more chambers that provides each function described below.

During operation, the heated feed solution enters first chamber 64 via feed inlet line 24. The feed solution is then directed to hollow fiber membranes 78. The feed solution enters the hollow fiber membranes 78 on the first tube side and travels towards third chamber 68 and residual concentrated feed solution outlet line 36. At the same time, cooled residual concentrated feed solution enters second manifold 70 via residual concentrated feed solution inlet line 44, and flows through the inner hollow regions of hollow recuperators 80 on the second tube side toward first manifold 62 and feed outlet line 26. As the cooled residual concentrated feed solution flows through the inner hollows of hollow recuperators 80, the temperature differentials between the interior and exterior surfaces of hollow recuperators 80 allows for the transfer of thermal energy within second (contactor) chamber 66. Since, the cooled residual concentrated feed solution has a temperature lower than the distillate on the shell side of contactor module 12, the cooled residual concentrated feed solution absorbs thermal energy across the walls of hollow recuperators 80. The cooled residual concentrated feed solution on the second tube side is thereby warmed and the distillate on the shell side is cooled. The residual concentrated feed solution traveling through hollow recuperators 80 is warmed as it passes through contactor module 12. This residual concentrated feed solution exits contactor module 12 at first manifold 62 through feed outlet line 26 and returns to first feed loop 14 where it is heated and returned to contactor module 12 as heated feed solution. The passage of residual concentrated feed solution through hollow recuperators 80 allows the residual concentrated feed solution to be preheated before it reaches heat exchanger 32 of first feed loop 14. The preheating of residual concentrated feed solution provides for heat recuperation and a reduction in energy needed to heat the feed solution before it enters contactor module 12.

As the feed solution flows through the inner hollows of hollow fiber membranes 78, the temperature differentials between the interior and exterior surfaces of hollow fiber membranes 78 (the first tube side and the shell side, respectively) create vapor pressure differentials across hollow fiber membranes 78 within second (contactor) chamber 66. The vapor pressure differentials allow vapor from the feed solution in the hollow fiber membranes 78 to be transported from the tube side of hollow fiber membranes 78 to the shell side and condense as distillate. Distillate separates from the feed solution and passes across the hollow fiber membranes 78 from the first tube side to the shell side.

As discussed above, the elevated temperature of the feed solution on the first tube side and the reduced temperature of the distillate on the shell side substantially increase the vapor pressure differentials across hollow fiber membranes 78, thereby increasing the separation rate of distillate from the feed solution. The vapor pressure differentials cause a portion of the distillate in the feed solution to evaporate and transmit through the micropores of hollow fiber membranes 78. When the vapor passes from the inner hollow regions of hollow fiber membranes 78 into the shell side of the interior region 74, the cooled supply of distillate causes the vapor to condense near the pore entrances on the shell side (i.e. exterior surfaces) of hollow fiber membranes 78 (liquid gap mode) or the shell side of hollow recuperators 80 (air gap mode) in interior region 74 and mix with the distillate. As discussed below, in some embodiments, the exterior of the hollow fiber membranes 78 are hydrophobic. The hydrophobic exterior of hollow fiber membranes 78 prevents distillate from reentering the membrane pores and rejoining the feed solution on the first tube side of hollow fiber membranes 78. Due to the system pressure and/or gravity, the distillate flows toward distillate outlet section 72 once it enters the shell side, and proceeds into distillate outlet line 46.

The feed solution generally remains in a liquid state while flowing through the first tube side of contactor module 12, within the interior surfaces of hollow fiber membranes 78. The hydrophobic surface of the hollow fiber membranes 78 (first tubes) keeps feed solution from entering the membrane pores while allowing vapor transport from the first tube side to the shell side of contactor module 12. Additionally, the pressure of the feed solution entering contactor module 12 is also less than the liquid penetration pressure of hollow fiber membranes 78. If the pressure of the feed solution exceeds the liquid penetration pressure of hollow fiber membranes 78, portions of the liquid feed solution may be forced through the micropores of hollow fiber membranes 78 into the shell side of contactor module 12. Accordingly, the temperature and pressure of the feed solution entering contactor module 12 are balanced to prevent transmission of the feed solution across hollow fiber membranes 78.

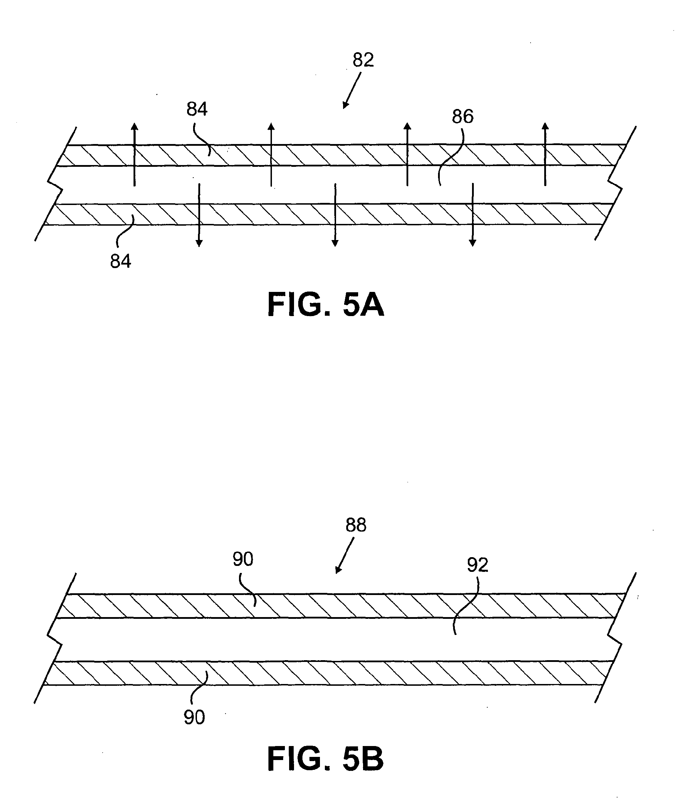

FIG. 5A is an expanded sectional view of membrane 82, which is an example of a single membrane of hollow fiber membranes 78 (shown in FIGS. 2-4). As shown in FIG. 5A, membrane 82 includes membrane wall 84 and inner hollow region 86. Membrane wall 84 is generally formed from one or more hydrophobic materials and includes a plurality of micropores (not shown) that allow the transmission of gases and vapors, but restrict the flow of liquids and solids. This allows the evaporated distillate to separate from the feed solution via vapor pressure transport. Examples of suitable materials for membrane wall 84 include hydrophobic polymeric materials, such as polypropylenes, polyethylenes, polytetrafluoroethylenes, polyvinylidene difluorides, Halar® ECTFE (ethylene chlorotrifluoroethylene, available from Solvay Solexis, Brussels, Belgium) and combinations thereof. Other suitable materials may include non-hydrophobic polymer materials, such as polysulfones, polyethersulfones, and polyimides that are coated with hydrophobic material(s). Examples of particularly suitable materials for membrane wall 84 include thermally-resistant polymeric materials, such as polytetrafluoroethylenes, polyvinylidene difluorides, and combinations thereof.

FIG. 5B is an expanded sectional view of non-porous hollow tube 88, which is an example of a single hollow recuperator 80 (shown in FIGS. 2-4). As shown in FIG. 5B, non-porous hollow tube 88 includes a non-porous and solid wall 90 and inner hollow region 92. Solid wall 90 is made up of a non-porous material that blocks the transmission of gases and vapors, thereby preventing mass (fluid) transfer across non-porous hollow tube 88. Suitable materials for non-porous hollow tubes 88 include polymeric materials that possess high thermal conductivity and are stable to heat and aqueous solutions. Examples of suitable materials include the suitable polymeric materials discussed above for membrane wall 84. Other suitable materials may include materials that can tolerate the thermal stress provided by the system and are resistant to corrosion in aqueous environments. Examples include metals, such as stainless steel. In exemplary embodiments, the exterior surface of hollow recuperators 80 (the shell side) is hydrophilic. Hydrophilic exteriors of hollow recuperators 80 further prevent distillate from reentering the hydrophobic walls of hollow fiber membranes 78.

As discussed above, while within second (contactor) chamber 66, the distillate flows through the shell side of interior region 74 of contactor module 12 and the heated feed solution flows through inner hollow region 86 of membrane 82 adjacent to the surface of membrane wall 84. This creates a vapor pressure differential across membrane wall 84, allowing distillate vapor to evaporate and penetrate through the micropores of membrane wall 84 into the shell side of interior region 74. When the distillate vapor passes into the shell side of interior region 74, the cool supply of residual concentrated feed solution within hollow recuperators 80 (second tubes) causes the distillate vapor to condense within the shell side of interior region 74 on the exterior of hollow recuperators 80 (second tubes) and mix with the distillate.

As discussed above, the pressure of the feed solution entering contactor module 12 is also less than the liquid penetration pressure of membrane wall 84 of membrane 82. The liquid penetration pressure of membrane wall 84 is generally dependent on the composition of membrane wall 84, the wall thickness of membrane wall 84, and on the sizes of the micropores of membrane wall 84. Examples of suitable wall thicknesses for membrane wall 84 range from about 50 micrometers to about 500 micrometers, with particularly suitable wall thicknesses ranging from about 100 micrometers to about 250 micrometers. Examples of suitable average micropore sizes for membrane wall 84 range from about 0.1 micrometers to about 0.6 micrometers, with particularly suitable average micropore sizes ranging from about 0.2 micrometers to about 0.4 micrometers.

Although the present invention has been described with reference to exemplary embodiments, workers skilled in the art will recognize that changes may be made in form and detail without departing from the scope of the invention, which is defined by the claims.

## Claims

1. A contactor module (12) comprising:
an outer casing (52) having an interior region (74);
a plurality of hollow fiber membranes (78) extending through the interior region and configured to convey a first feed solution and to allow vapor transmission therethrough;
a plurality of hollow tubes (80) extending through the interior region proximate the hollow fiber membranes and configured to convey a second feed solution, to substantially prevent vapor transmission therethrough, and to allow transmission of thermal energy therethrough, wherein ends of the hollow tubes are longitudinally offset from ends of the hollow fiber membranes; and
a distillate collection chamber (66) disposed within the interior region and through which the hollow fiber membranes and hollow tubes extend, wherein vapor transmitted through the hollow fiber membranes condenses as distillate in the distillate collection chamber and exchanges thermal energy with the second feed solution of the hollow tubes.

2. The contactor module of claim 1, wherein the hollow tubes (80) are longer than the hollow fiber membranes (78).

3. The contactor module of claim 1, wherein the hollow tubes (80) are about as long as the hollow fiber membranes (78).

4. The contactor module of claim 1, 2 or 3 wherein the hollow fiber membranes (78) comprise a microporous membrane wall (84), and wherein the hollow tubes (80) comprise a non-porous, solid wall (90).

5. The contactor module of claim 4, wherein the microporous membrane wall (84) is formed from at least one polymeric material chosen from the group of polypropylenes, polyethylenes, polytetrafluoroethylenes, polyvinylidene difluorides, ethylene chlorotrifluoroethylene and combinations thereof and/or
wherein the non-porous, solid wall (90) is formed from at least one material chosen from the group of polypropylenes, polyethylenes, polysulfones, polyethersulfones, polyetheretherketones, polyimides, polyphenylene sulfides, polytetrafluoroethylenes, polyvinylidene difluorides, metals, and combinations thereof.

6. The contactor module of any preceding claim, wherein the hollow fiber membranes (78) are configured in use to receive a feed solution from a first feed solution loop (14) and the hollow tubes (80) are configured in use to receive the feed solution from a second feed solution loop (16).

7. The contactor module of any preceding claim, wherein the hollow fiber membranes (78) have an average micropore size ranging from about 0.1 micrometers to about 0.6 micrometers.

8. The contactor module of any preceding claim, wherein the hollow fiber membranes (78) and hollow tubes (80) are configured to have vertical longitudinal axes in use.

9. The contactor module of any preceding claim, wherein the hollow fiber membranes (78) extend from a first feed inlet chamber (64) to a first feed outlet chamber (68) and the hollow tubes (80) extend from a second feed inlet chamber (70) to a second feed outlet chamber (62).

10. The contactor module of any preceding claim, wherein the hollow fiber membranes (78) and hollow tubes (80) are arranged in a spiral configuration within the distillate collection chamber.

11. The contactor module of any of claims 1 to 9, wherein the hollow fiber membranes (78) and hollow tubes (80) are arranged in a layered configuration within the distillate collection chamber (66).

12. The contactor module of claim 1, comprising means (73, 50) for providing a fluid to be recirculated through the distillate collection chamber (66).

13. A distillation apparatus comprising:
a residual feed inlet manifold (70) comprising a residual feed inlet opening (44);
a residual feed outlet manifold (62) comprising a residual feed outlet opening (26); and
a contactor module (12) as claimed in any preceding claim comprising:
an outer casing (52) having an interior region (74) and spaced between the residual feed outlet manifold and the residual feed inlet manifold;
a plurality of seals (56, 58) disposed within the outer casing, thereby dividing portions of the interior region into a feed inlet chamber (64), a distillate collection chamber (66), and a feed outlet chamber (68);
a feed inlet opening (24) extending through the outer casing at the feed inlet chamber;
a feed outlet opening (36) extending through the outer casing at the feed outlet chamber;
a plurality of hollow fiber membranes (78) within the interior region and extending from the feed inlet chamber (64) to the feed outlet chamber (68), wherein the hollow fiber membranes are configured to allow vapor transmission therethrough;
a plurality of hollow tubes (80) within the interior region and in fluid connection with the residual feed inlet manifold (62) and the residual feed outlet manifold (70), wherein the hollow tubes are configured to substantially prevent vapor transmission therethrough and further configured to allow transmission of thermal energy therethrough, and wherein ends of the hollow tubes are longitudinally offset from ends of the hollow fiber membranes; and
at least one distillate outlet (72) extending through the outer casing and in fluid communication with the distillate collection chamber (66).

14. The distillation apparatus of claim 13 further comprising a fluid pump (50) in fluid communication with the distillate collection chamber (66).

15. A method of separating distillate fluids from a feed solution comprising:
heating a feed solution to a heated feed solution in a heating heat exchanger (32);
flowing the heated feed solution through a plurality of hollow fiber membranes (78) located within a contactor module (12), wherein vapor from the heated feed solution permeates the hollow fiber membranes and flows through the hollow fiber membranes to a distillate collection chamber (66) within the contactor module, wherein the heated feed solution transforms to a residual feed solution;
flowing the residual feed solution from the hollow fiber membranes and the contactor module to a cooling heat exchanger (38);
cooling the residual feed solution in the cooling heat exchanger;
flowing the residual feed solution through a plurality of hollow tubes (80) located proximate the hollow fiber membranes within the contactor module, wherein thermal energy from the heated feed solution flowing through the hollow fiber membranes is transferred to the distillate in the distillate collection chamber and from the distillate to the residual feed solution flowing within the hollow tubes;
flowing the residual feed solution from the hollow tubes and the contactor module to the heating heat exchanger; and
collecting distillate from the distillate collection chamber;
wherein a hydraulic pressure gradient between the heated feed solution and the residual feed solution is not required for effective transfer of the thermal energy.
